# EUROPEAN PATENT SPECIFICATION

(11) **EP 1 089 110 B1**
(45) Date of publication and mention of the grant of the patent: **22.12.2004**
(21) Application number: 00307897.9
(22) Date of filing: 13.09.2000
(51) Int. Cl.: G02B 26/02, G09F 9/37

(54) **Electrostatically actuated film display device**
Bilddarstellungssystem mit elektrostatisch gesteuertes Film
Système d'affichage comprenant un pétale à commande électrostatique

(30) Priority: 28.09.1999 JP 27400499
(43) Date of publication of application: 04.04.2001
(73) Proprietor: KABUSHIKI KAISHA TOSHIBA, Kawasaki-shi, Kanagawa-ken 210-8572 (JP)
(72) Inventor: Sugahara, Atsushi, IP Division, K.K Toshiba, Tokyo 105-8001 (JP); Lang, Richard, IP Division, K.K Toshiba, Tokyo 105-8001 (JP)
(74) Representative: Luckhurst, Anthony Henry William

(56) References cited:
- DE-A- 3 047 495
- US-A- 3 553 364
- US-A- 3 989 357
- US-A- 4 194 189
- US-A- 4 704 707
- PATENT ABSTRACTS OF JAPAN vol. 1999, no. 09, 30 July 1999 (1999-07-30) & JP 11 095693 A (TOSHIBA CORP), 9 April 1999 (1999-04-09)

## Description

The present invention relates to an actuated film display device.

In large display devices and portable display devices, it has recently been desired that the power consumption is lowered. As the display device attaining the low power consumption, known is an actuated film display device using a movable film shutter in which a moveable film is driven by an electrostatic force.

The fundamental structure of the actuated film display device is disclosed in Japanese Patent Application publication No. 11-95693 (US Application No. 09/119,390). In this disclosure, gray scale display is attained by selectively driving sub pixels constituting one pixel. However, for the gray scale display in the actuated film display device mentioned above, a large number of signal lines and scanning lines are required when a plurality of sub pixels of one pixel are selectively turned on and off. To drive the signal lines and scanning lines, a large number of driving ICs are required. Furthermore, since a plurality of driving ICs are arranged in the display device, the size of the device is inevitably enlarged. In the circumstances, an actuated film display device capable of displaying the gray scale in a simple structure has been desired.

In US 4 194 189 an optical switch is described which comprises two fixed electrets and a mobile element. At least one electret is provided on either of the electrodes or the mobile element such that movement of the mobile element causes the electret to come into contact with the mobile element to thus activate the switch.

US 3 989 357 relates to an electrostatic device which may be used for controlling the transmission or reflection of light by means of varying an electrical potential. The device comprises a fixed and a variable electrode with an insulator positioned therebetween. The variable electrode is provided in the form of a spiral or roll.

An object of the present invention is to provide an actuated film display device capable of displaying gray scale by a simple driving circuit.

To attain the object, there is provided an actuated film display device according to a first aspect of the present invention comprising:
a first fixed electrode;
a first movable film electrode, which is placed to face the first fixed electrode to form a first optical path on an opposing side to the first fixed electrode, and which ha a fixed end and a movable end, the movable end being displaced toward the first fixed electrode by application of a first critical voltage between the first fixed electrode and the first movable film electrode, thereby shutting off the first optical path;
a second fixed electrode; and
a second movable film electrode, which is placed to face the second fixed electrode to form a second optical path on an opposing side to the second fixed electrode, which has a fixed end and a movable end, the movable end being displaced toward the second fixed electrode by application of a second critical voltage between the second fixed electrode and the second movable film electrode, thereby shutting off the second optical path;
characterized in that the second critical voltage is different from the first critical voltage, and the first movable film electrode and the second movable film electrode are connected to a single signal line.

The actuated film display device is desirably constituted as follows:

A distance between the fixed end and the movable end of the first movable film electrode differs from a distance between the fixed end and the movable end of the second movable film electrode.

A thickness of the first movable film electrode differs from a thickness of the second movable film electrode.

A distance between the first fixed electrode and the fixed end of the first movable film electrode differs from a distance between the second fixed electrode and the fixed end of the second movable film electrode.

The display device further comprises a plurality of pixels, each pixel including a pair of the first fixed electrode and the first movable film electrode and a pair of the second fixed electrode and the second movable film electrode.

Each of the first and second fixed electrodes comprises a light guiding portion which is formed of a transparent material and has a curved surface which faces a corresponding one of the first and second movable film electrodes, and an electrode formed of a transparent conductive layer and formed on the curved surface.

The display device further comprises an insulating layer covering the conductive layer.

The first and second fixed electrodes are plate-form electrodes each of which faces a corresponding one of the first and second movable film electrodes so as to form a light guiding portion therebetween.

The display device further comprises an insulating layer covering at least a tip portion of each of the first and second fixed electrodes.

The display device further comprises a light source arranged at a side of the fixed end of the movable film electrode.

The present invention may further comprise:
a plurality of optical shutter sets arranged in rows and columns, each of the optical shutter sets comprising at least two optical shutter units different in applied voltage/displacement characteristics, each of said at least two optical shutter units being formed of a pair of the first fixed electrode and the first movable film electrode and a pair of the second fixed electrode and the second movable electrode; and
a first driving circuit for supplying a driving signal to the optical shutter sets arranged in each of the rows; and
a second driving circuit for supplying a driving signal to the optical shutter sets arranged in each of the columns;
wherein the first driving circuit supplies a first potential to the first and the second fixed electrode of the optical shutter units in each of the rows, and
said second driving circuit supplies a second potential to the first and the second movable film electrode of the optical shutter units in each of the columns.

According to the present invention, the gray scale can be displayed by the movable film display device without using numerous signal lines and scanning lines. Therefore, it is not necessary to use a large number of driving ICs for driving the numerous signal line and scanning lines. As a result, cost can be reduced. Furthermore, the display device can be reduced in size.

This summary of the invention does not necessarily describe all necessary features so that then invention may also be a sub-combination of these described features.

This invention can be more fully understood from the following detailed description when taken in conjunction with the accompanying drawings, in which:
FIG. 1 is a perspective view for one unit of an optical shutter of a conventional actuated film display device;
FIG. 2A is an illustration for explaining a principle of the optical shutter;
FIG. 2B is an illustration for explaining a principle of the movable film shutter;
FIG. 2C is a characteristic illustration for explaining hysteresis characteristics of the actuated film display device;
FIG. 3 is a schematic view showing a basic structure of the conventional actuated film display device;
FIG. 4 is a schematic view showing an actuated film display device in which shutter units of FIG. 3 are arranged in a matrix form;
FIG. 5 is a diagram showing how to connect elements of the display device of FIG. 4 for explaining a driving method of the device;
FIG. 6 is a schematic view showing a structure of one pixel attaining gray scale display in the conventional actuated film display device;
FIG. 7 is a schematic view showing arrangement of color filters in the conventional actuated film display device;
FIG. 8 is a schematic view showing a structure of a pixel arranged under each of the color filters of FIG. 7 and attaining the gray scale display;
FIG. 9 is a schematic view showing a shutter set corresponding to one pixel of an actuated film liquid crystal display device according to a first embodiment of the present invention;
FIG. 10 is a graph showing the relationship between an applied voltage and a tip displacement of a film electrode in the shutter set of FIG. 9;
FIG. 11 is a diagram showing how to connect elements of the actuated film display device in which the shutter sets of FIG. 9 are arranged in the form of a matrix;
FIG. 12 is a view for explaining the shutter set corresponding to one pixel of an actuated film display device according to a second embodiment of the present invention;
FIG. 13 is a view for explaining the shutter set corresponding to one pixel of an actuated film display device according to a third embodiment of the present invention;
FIGS. 14A and 14B are views for explaining an operational principle of the actuated film display device according to a fourth embodiment of the present invention;
FIG. 15 is a view for explaining the shutter unit of the actuated film display device according to the fourth embodiment of the present invention;
FIG. 16 is a view for explaining the shutter set corresponding to one pixel of the actuated film display device according to the fourth embodiment of the present invention;
FIG. 17 is a view for explaining the shutter set corresponding to one pixel of the actuated film display device according to a fifth embodiment of the present invention;
FIG. 18 is a view for explaining the shutter set corresponding to one pixel of the actuated film display device according to a sixth embodiment of the present invention; and
FIG. 19 is a view for explaining the shutter set corresponding to one pixel of the actuated film display device according to an example useful for understanding the present invention.

Prior to the explanation of embodiments, the prior art will be explained with reference to some of the disclosures of Japanese Patent Application KOKAI publication No. 11-95653.

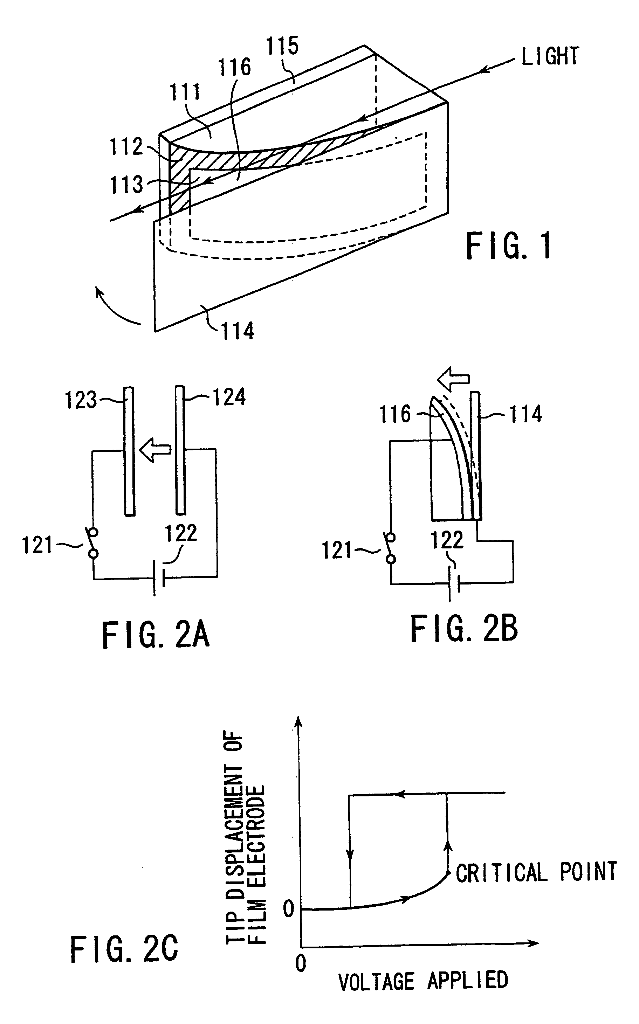

FIG. 1 is a perspective view of one shutter unit constituting a movable film shutter. The shutter unit comprises a transparent light guiding body 111, a black matrix 112 which is a light shield portion arranged on a curved surface of the transparent light guiding body 111, an opening portion 113 surrounded by the black matrix 112, a light-shield movable film 114 arranged so as to face the opening portion 113 of the transparent light guiding body 111, and a light shielding board 115 arranged so as to face the movable film 114 with the transparent light guiding body 111 sandwiched between them. The light shield board 115 may be a reflective board.

Light is incident on the transparent light guiding body 111 in the direction indicated by an arrow and passes through it. For gray scale display, one pixel is constituted of a plurality of transparent light guiding bodies 111. In an arbitrary number of the transparent light guiding bodies 111, the movable film 114 is bent to change the area covering the opening portion 113. Since the amount of light emitted from the opening portion 113 can be changed in this manner, the gray scale can be displayed.

The surface of the opening portion of the transparent light guiding body 111 is made conductive, so that it works as a fixed electrode 116. The movable film 114 is made conductive, so that it works a movable electrode. Since a transparent insulating film (not shown) is formed on the surface of the fixed electrode, a short circuit between the movable electrode and the fixed electrode can be prevented.

Next, the principle how the movable film 114 is displaced will be explained. As shown in FIG. 2A, when a switch 121 is turned on to apply a voltage from a power source 122 between two electrodes 123 and 124, an electrostatic force is generated between the two electrodes. In this case, if these two electrodes are replaced with the movable electrode (movable film) 114 and the fixed electrode 116 formed on the surface of the transparent light guiding body as shown in FIG. 2B and a voltage is applied between them, the movable film 114 is bent as indicated by a broken line and covers the fixed electrode 116. The movable film 114 has a light shield property. Therefore, a light is transmitted when no voltage is applied, whereas the light is shut out when the movable film 114 is bent upon an application of a voltage.

FIG. 2C shows the relationship between the applied voltage and the tip displacement of the movable film when the movable film is bent by a voltage application. In FIG. 2C, the tip of the movable film is gradually displaced with an increase of the voltage. When a displacement amount reaches to a critical point, the tip is suddenly displaced and reaches the maximum displacement amount. At the maximum displacement amount, the movable film is in tight contact with the surface insulating film of the fixed electrode. Therefore, even if the voltage is further increased, the displacement amount is not increased. In contrast, if the voltage is reduced, the displacement amount is not reduced for a while. This is because even if two electrodes want to separate, an electrostatic force between the electrodes prevents the separation. Therefore, no displacement occurs until an elastic force of the movable film exceeds the electrostatic force. In this sense, the movable film displacement has so-called hysteresis characteristics.

Now, the actuated film display device using a movable film shutter having hysteresis characteristics will be explained.

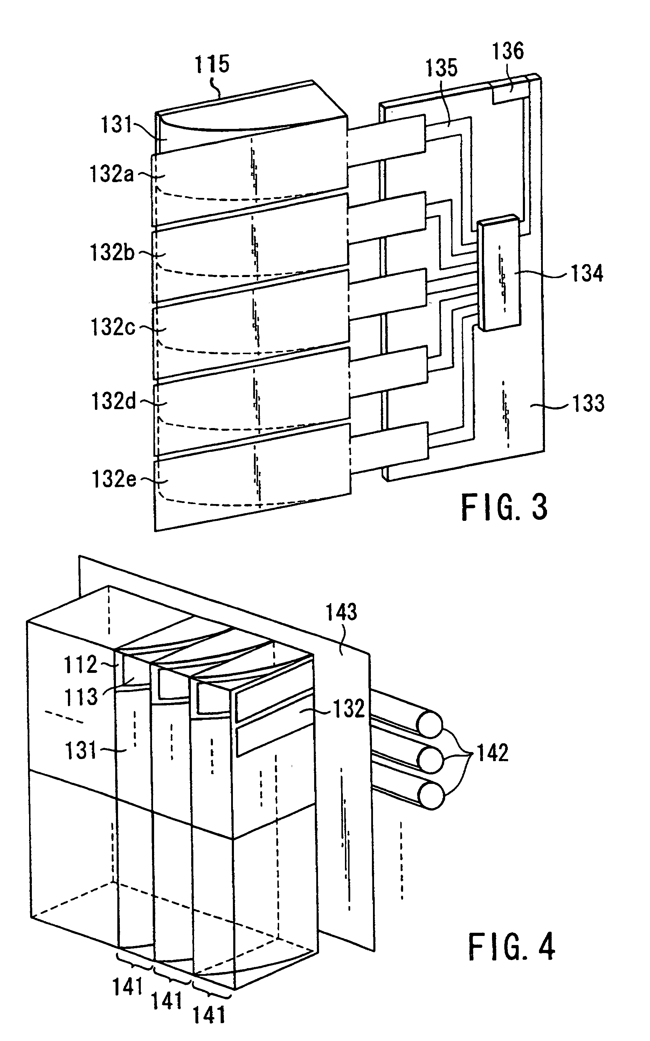

As shown in FIG. 3, a plurality of movable film electrodes 132a-132e are arranged so as to face one transparent light guiding fixed electrode portion 131. A circuit substrate 133 is adjacent to the transparent light guiding fixed electrode portion 131. On the circuit substrate 133, a driving IC 134 is arranged. The movable film electrodes 132a-132e are connected to the driving IC 134 by way of wirings 135. In a circuit substrate 133, a connecter portion 136 is provided to perform data exchange with an adjacent display device.

As shown in FIG. 4, the aforementioned movable film shutter units 141 are arranged in the form of a matrix to obtain an actuated film display device having a plurality of shutters arranged in a matrix. In FIG. 4, the light from a fluorescent lamp 142 is dispersed by a dispersion board 143, enters the transparent light guiding fixed electrode portion 131 and is emitted from the opening portion 113 when the opening portion 113 is not covered with the bending movable film electrode 132. In this case, the emitted light is colored by a color filter (not shown).

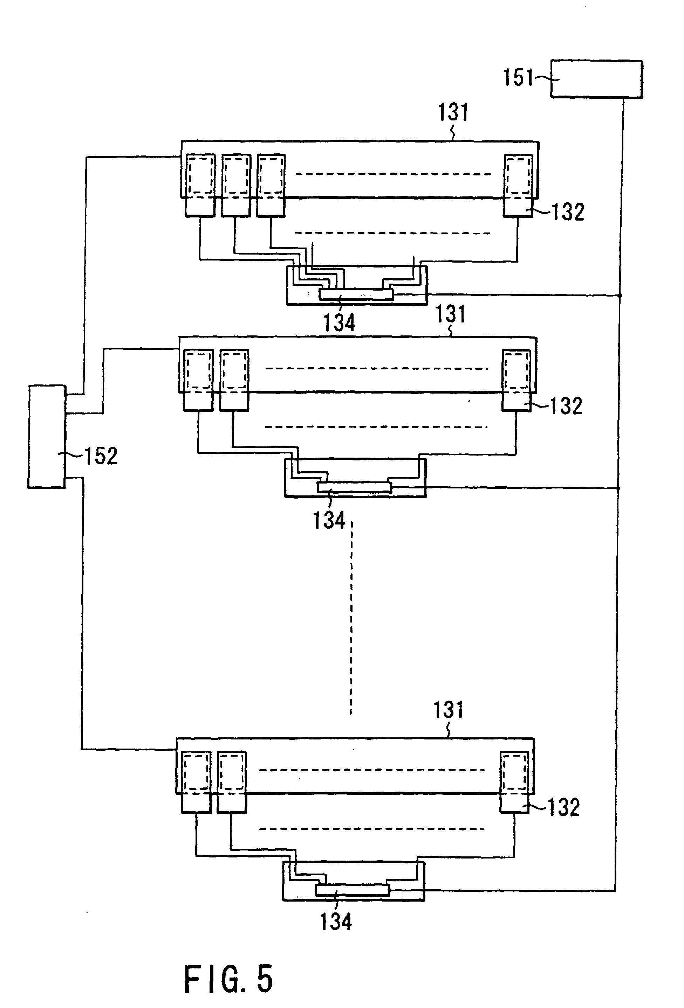

Now, the method of driving the actuated film display device will be explained with reference to a wiring diagram shown in FIG. 5.

In the actuated film display device, the transparent light guiding fixed electrode potion 131 acts as a scanning line. The picture image data sent from a signal source driving circuit 151 is once stored in the driving IC 134 and is transmitted to the movable film electrode 132 as a potential. At this time, if a scanning potential has been given from a scanning line driving IC 152 to the transparent light guiding fixed electrode 131, a potential difference is generated between the fixed electrode 131 and the movable film electrode 132. As a result, the movable film electrode 131 can be bent toward the transparent light guiding fixed electrode 131. If the movable film electrode 132 and the transparent light guiding fixed electrode 131 have the same potential, no attractive force works between the film electrode 132 and the transparent light guiding fixed electrode 131, so that the movable film electrode 132 is separated from the transparent light guiding fixed electrode 131 due to the elastic force of the movable film electrode 132.

Next, there will be explained a conventional method for displaying gray scale using the actuated film display device.

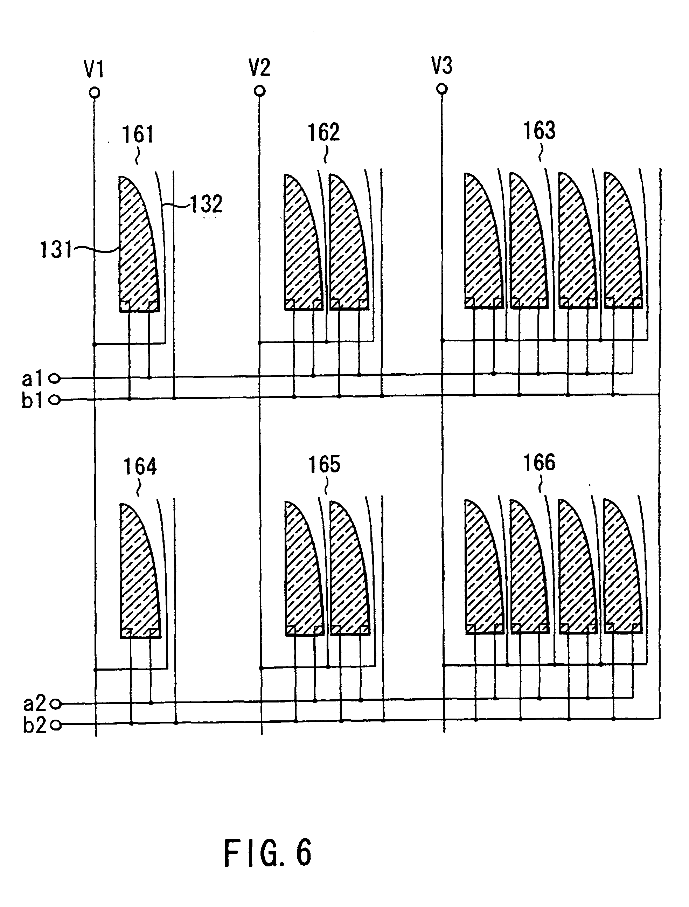

FIG. 6 shows one pixel formed of a plurality of movable film shutters. In this example, the single pixel has six sub pixels 161- 166 which are arranged in the form of a 3 × 2 matrix.

The transmitted light amounts of the six sub pixels 161-166 are made different with each other. First, each of the sub pixel 161 and the sub pixel 164 is formed of one movable film shutter. Each of the sub pixel 161 and the sub pixel 165 is formed of two movable film shutters. Each of the sub pixel 163 and the sub pixel 166 is formed of four movable film shutters. Furthermore, the width direction of the movable film shutter is vertical to the surface of the figure. Although not shown in the figure, the width (in the depth direction to the surface of the figure) of each of the film shutters of the sub pixels 161, 162, 163 is narrow, whereas the width (in the depth direction to the surface of the figure) of each of the film shutters of the sub pixels 164, 165, 166 is wide.

In this case, it is possible to display gray scale by one pixel owing to a plurality of sub pixels (6, in this case). More specifically, the gray scale can be displayed by selectively opening/closing the six sub pixels. This is because the light transmitting area, that is, the transmitted light amount is changed by opening/closing the sub pixels. The principal of this will be described more specifically below.

As shown in FIG. 6, since the movable film electrode 132 is connected to a signal line, any one of voltages V1 to V3 is applied to the electrode. Furthermore, the transparent light guiding fixed electrode portion 131 is connected to scanning lines, an and bn (n = 1, 2). As a result, a potential Van (n = 1, 2) is applied to the curved surface, whereas a potential Vbn (n = 1, 2) is applied to the non-curved surface. Furthermore, a plane electrode is provided at an end of each of the sub pixel opposing to the curved surface. To the plane electrode, Vbn is applied. Therefore, the movable film 132 is sandwiched between the Van-applied electrode and the Vbn-applied electrode and moved by the electrostatic forces applied to both electrodes.

An example of operation of the constitution thus constructed will be explained below. First, positive and negative potentials of the same value are applied respectively to a pair of the scanning lines to be driven. On the other hand, a potential Vn (n = 1 to 3) is applied to a signal line depending upon a display signal. At that time, if Vn = 0, the movable film electrode 132 is not bent. If Vn ≠ 0, the movable film electrode 132 is bent toward a side having a larger potential difference whichever between Vn and Van or between Vn and Vbn. Furthermore, even after the pair of scanning lines is turned off, the displacement is maintained. Then, a next scanning line pair is driven and a signal potential is supplied to respective signal lines. If this procedure is repeated, a desired one or ones of sub pixels in one pixel can be opened/closed. In this manner, dither gray scale display can be attained. Therefore, it is possible to send individual image data to each of six sub pixels by properly setting potentials of the signal lines and scanning lines.

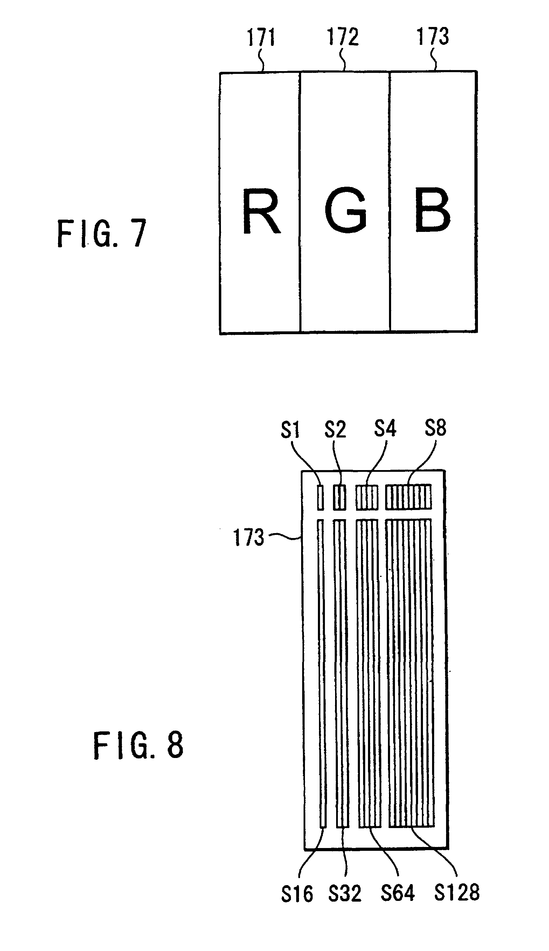

FIG. 7 is a pixel of an actuated film display device as viewed from a color-filter side. Reference numerals 171, 172, 173 show the color filters R, G, B, respectively. FIG. 8 is a top view of a pixel under the color filer B. In FIG. 8, there are 8 sub pixels S1-S128. The area ratio of 8 sub pixels are 1:2:4:8:16:32:64:128. Depending upon combinations of the sub pixels to be driven, 256 scales can be formed. If the display device displays 256 scales, it can be employed as a TV screen.

However, when the gray scale is displayed by the above-described display device, numerous signal lines and scanning lines are required to open/close a plurality of sub pixels in one pixel. Therefore, to drive the numerous signal lines and scanning lines, a large number of driving ICs is required. Furthermore, to arrange the large number of driving ICs, the size of the device is inevitably enlarged.

The present invention was made to overcome the aforementioned problems. Hereinafter, embodiments of the present invention will be explained with reference to the drawings.

The actuated film display device of the present invention has the movable film shutters (as shown in FIG. 1) which can be displaced on the basis of the same principle as show in FIG. 2A. These movable film shutters are arranged in the same manner as in FIG. 3. If the movable film shutters are arranged in rows and columns as is in FIG. 4, a matrix-form actuated film display device can be obtained. The wiring of the actuated film display device is carried out in the same manner as in FIG. 5.

### (First embodiment)

FIG. 1 shows an optical shutter set corresponding to one pixel of an actuated film display device according to the first embodiment of the present invention. In the actuated film display device of this embodiment, one pixel is formed by using a shutter set 230a which is constituted of at least two shutter units different in optical distance.

In the first embodiment, three types of shutter units different in optical distance are prepared. More specifically, the shutter units have movable films different in length and transparent light guiding fixed electrode portions having length values corresponding to the movable films. Each of the transparent light guiding fixed electrode portions 231a-231c is, for example, grounded. The same voltage is applied to the movable film electrodes 232a-232c different in length by a variable voltage power source 11. Furthermore, a fluorescent light is used as a light source 12. The light from the light source 12 passes through the transparent light guiding bodies 13a-13c and goes out in the direction indicated by an arrow.

Note that the movable film electrodes 232a-232c are formed of polyethylene terephthalate (PET) film of about 12 µm in thickness. Aluminium is deposited in a thickness of about 10-100 nm on both surfaces of the PET film. The aluminium-deposited film is cut into desired sizes by a cutter or a laser beam.

The material of the movable film electrodes 232a-232c is not limited to the PET film. Polyimide, aramid, polyethylene, polycarbonate and the like may be used as the material.

The transparent light guiding bodies 13a-13c are formed of polyacetal, polystyrene, liquid crystal polymer or the like and formed by injection molding or stamping. Furthermore, on the surfaces of the transparent light guiding bodies 13a-13c, a metal such as aluminium, gold, copper, or silver is deposited in a thickness of about 10 to 100 nm. The metal deposited portions act as the transparent light guiding fixed electrode portion 231a-231c. On the surface of the transparent light guiding fixed electrode portion 231a-231c, an insulating film (not shown) having a thickness of about 1 to 10 µm is formed by electrodeposition. A black matrix is provided around the outer periphery of the insulating film. The portion on which the insulating film is not attached is an opening portion. Light is emitted from the opening.

In the first embodiment, the movable film electrodes 232a-232c are set at about 3.5 mm, about 2.5 mm and about 1.5 mm. The transparent light guiding bodies 13a-13c are formed having length values corresponding to the length values of the movable film electrodes.

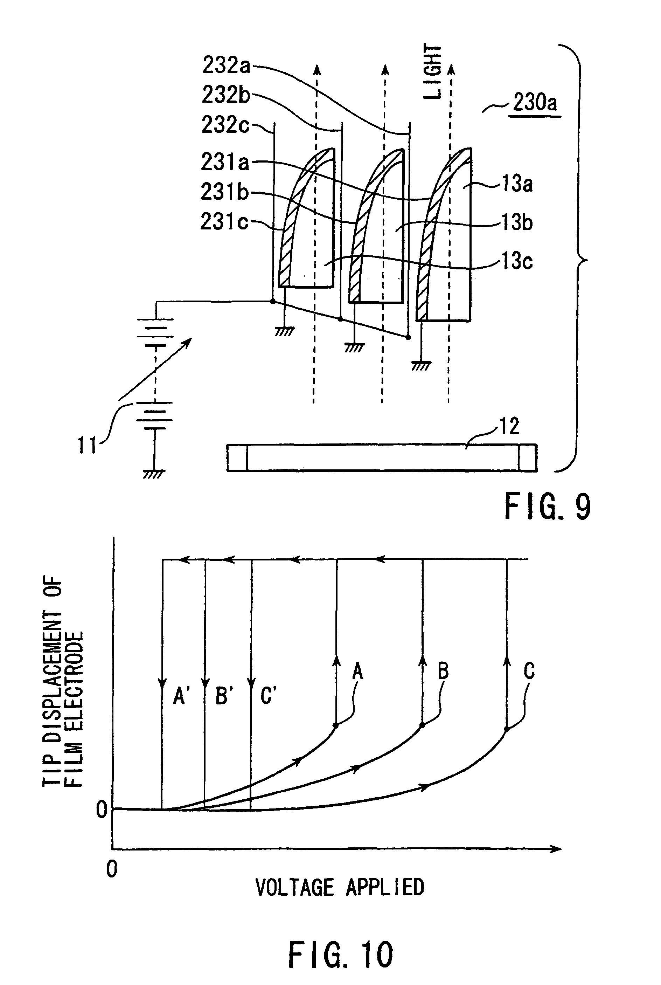

Now, there will be explained how to operate the actuated film display device of this embodiment. The same voltage is gradually applied to three types of movable film electrodes 232a-232c. When the voltage reaches critical voltages, each of the tips of the movable films is suddenly displaced, as shown in FIG. 10. In the first embodiment, the critical voltages corresponding to critical points A, B, C (indicated by solid circles) are different with each other. They are about 50V, about 70V, and about 100V. This is because the distance between a fixed end and a movable end varies depending upon pairs of the movable film electrodes 232a-232c and the transparent light guiding fixed electrode portion 231a-231c.
Accordingly, the respective elastic forces and electrostatic forces differ among them. As a result, the movable film electrodes 232a-232c are independently and suddenly displaced at different potential differences. In the first embodiment, the longest movable film electrode 232a reaches its critical point at the smallest potential difference. Although not shown in the figure, a planar fixed electrode may be arranged at an opposite side of the transparent light guiding fixed electrode portion 231a-231c with the movable film electrodes 232a to 232c sandwiched between them. By virtue of the presence of the planar fixed electrode, the displacement of the movable film electrodes 232a-232c can be more stabilized.

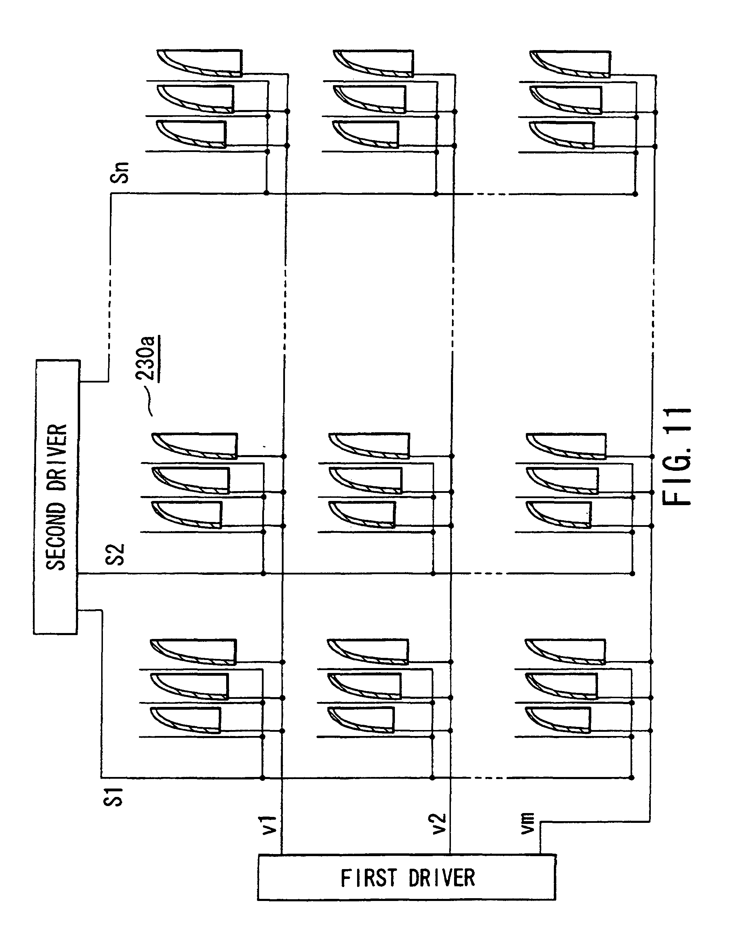

If the shutter sets 230a (shown in FIG. 9) are arranged in the form of a matrix as shown in FIG. 11, an actuated film display device can be constituted. A first signal (scanning signal) v1, v2 ··· vm (m is an integer) is supplied from a first driving circuit to every column of a plurality of shutter sets 230a and a second signal (pixel signal) S1, S2 ··· Sn (n is an integer) is supplied from the second driving circuit to every row of the shutter sets 230a, in the active matrix type display device. Each pixel can display in accordance with voltage difference between the corresponding scanning signal and pixel signal.

In the actuated film display device of the first embodiment, the number of movable films to be selectively opened/shut can be changed by changing only the voltage to be applied to one pixel. Therefore, it is not necessary to display the gray scale by using numerous signal lines and scanning lines. Accordingly, numerous driving ICs for driving the numerous signals lines and scanning lines are not required, so that cost reduction can be attained and the size of the device can be reduced.

### (Second embodiment)

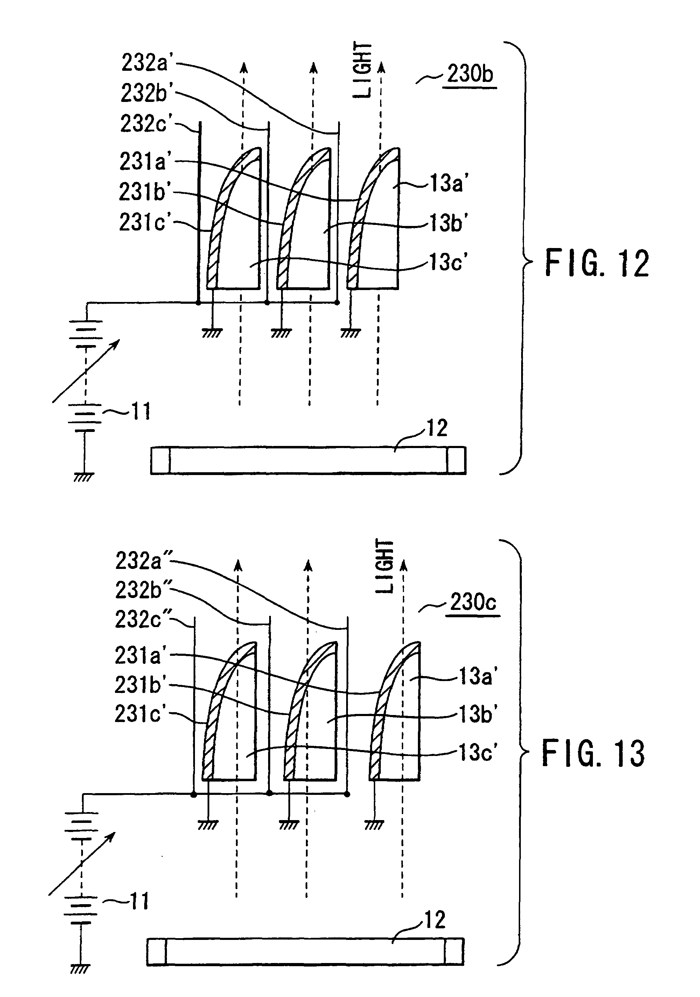

FIG. 12 is a schematic cross-sectional view of a shutter set corresponding to one pixel of the actuated film display device according to the second embodiment of the present invention.

The actuated film display device of the second embodiment is the same as that of the first embodiment in that a plurality of movable film shutter units are arranged in one pixel but differs in that one pixel is formed by using movable film shutter units which have the movable film electrodes of at least two type of thicknesses.

As shown in FIG. 12, in the shutter set 230b of the second embodiment, wiring of transparent light guiding fixed electrode portions 231a'-231c', transparent light guiding bodies 13a'-13c', and movable film electrodes 232a'-232c' is carried out in the same manner as in the first embodiment. The wiring may be formed of the same material in the first embodiment.

However, all movable film shutter units of the actuated film display device of the second embodiment have the same length. More specifically, the length of all the movable film electrodes 232a'-232c' are set at about 2.5 mm. The width of the movable film electrodes 232a'-232c' are set at about 6 µm, about 12 µm, and about 18 µm, respectively.

The same voltage is gradually applied to the three types of movable film electrodes 232a'-232c'. When the voltage reaches a critical point for one of the movable film electrodes, the movable film electrode is suddenly displaced. In this manner, the movable film electrodes are subsequently displaced upon reaching their critical points. In the second embodiment, the critical voltage A, B, C (indicated by solid circles similarly in FIG. 10) differ to each other. They are about 25V, about 70V, and about 160V. This is because the movable film electrodes 232a'-232c' differ in thickness. Accordingly, the respective elastic forces and electrostatic forces are different, with the result that the film electrodes 232a'-232c' are suddenly displaced at different potential differences. Although not shown in the figure, a planar fixed electrode is arranged at the opposite side of the transparent light guiding fixed electrode portion 231a'-231c' with the movable film electrodes 232a'-232c' sandwiched between them. By virtue of the presence of the planar fixed electrode, the displacement of the movable film electrodes 232a'-232c' can be stabilized.

If the shutter sets 230b of the second embodiment are also arranged in the form of a matrix as shown in FIG. 11, an active matrix type display device can be constituted.

In the second embodiment, the thinnest movable film electrode 232a' reaches its critical point at the smallest potential difference. Therefore, as is the same way as in the first embodiment, it is possible to change the number of movable films selectively opened/shut by changing only the voltage to be applied to one pixel, with the result that no numeral signal lines and scanning lines are required to display the gray scale.

### (Third embodiment)

FIG. 13 is a schematic cross-sectional view of a shutter set corresponding to one pixel of the actuated film display device according to a third embodiment of the present invention.

The actuated film display device of the third embodiment is the same as that of the first embodiment in that a plurality of movable film shutter units are arranged in one pixel but differs in that there are at least two kind of distances between the transparent light guiding fixed electrode portion and a fixed end of the movable film electrode in one pixel.

As shown in FIG. 13, in the shutter set 230c of the third embodiment, wiring of transparent light guiding fixed electrode portions 231a'-231c' and transparent light guiding bodies 13a'-13c' is carried out in the same manner as in the first embodiment. The wiring may be formed of the same material as in the first embodiment.

However, all the shutter units of the actuated film display device of the third embodiment have the same length. More specifically, the length of all the movable film electrodes 232a''-232c'' are set at about 2.5 mm.

The third embodiment differs from the first embodiment in that the distances between the transparent light guiding fixed electrode portions 231a'-231c' and the fixed ends of the movable film electrodes 232a"-232c" are set at about 100 µm, about 50 µm, and about 0 µm, respectively. These distances can be set by adhering the transparent light guiding fixed electrode portions 231a'-231c' to the fixed ends of the movable film electrodes 232a''-232c'' with a spacer such as a tape interposed between them.

The same voltage is gradually applied to the three types of movable film electrodes 232a''-232c''. When the voltage reaches a critical point for one of the movable film electrodes, the movable film electrode is suddenly displaced. In this manner, the movable film electrodes are subsequently displaced upon reaching their critical points. In the third embodiment, the critical voltages corresponding to critical points C, B, A (indicated by solid circles similarly in FIG. 10) are different. They are about 180V, about 110V, and about 70V. This is because the distances between the transparent light guiding fixed electrode portions 231a'-231c' and the fixed ends of the movable film electrodes 232a"-232c" differ, and therefore the respective elastic forces and electrostatic forces differ, with the result that the movable film electrodes 232a''-232c'' are displaced suddenly at different potential differences. In the third embodiment, the movable film electrode 232c" placed at the shortest distance from the fixed electrode 231c reaches its critical point at the smallest potential difference. Although not shown in the figure, a planar fixed electrode is arranged at the opposite side of the transparent light guiding fixed electrode portion 231a'-231c' with the movable film electrodes 232a"-232c" sandwiched between them. By virtue of the presence of the planar fixed electrode, the displacement of the movable film electrodes 232a"-232c" can be more stabilized.

If the shutter sets 230c of the third embodiment, are also arranged in the form of a matrix as shown in FIG. 11, an active matrix type display device can be constituted.

Also in the third embodiment, the number of movable films selectively opened/shut can be changed by changing only the voltage applied to one pixel in the same manner as in the first embodiment. Therefore, it is not necessary to display the gray scale by using numerous signal lines and scanning lines.

### (Fourth embodiment)

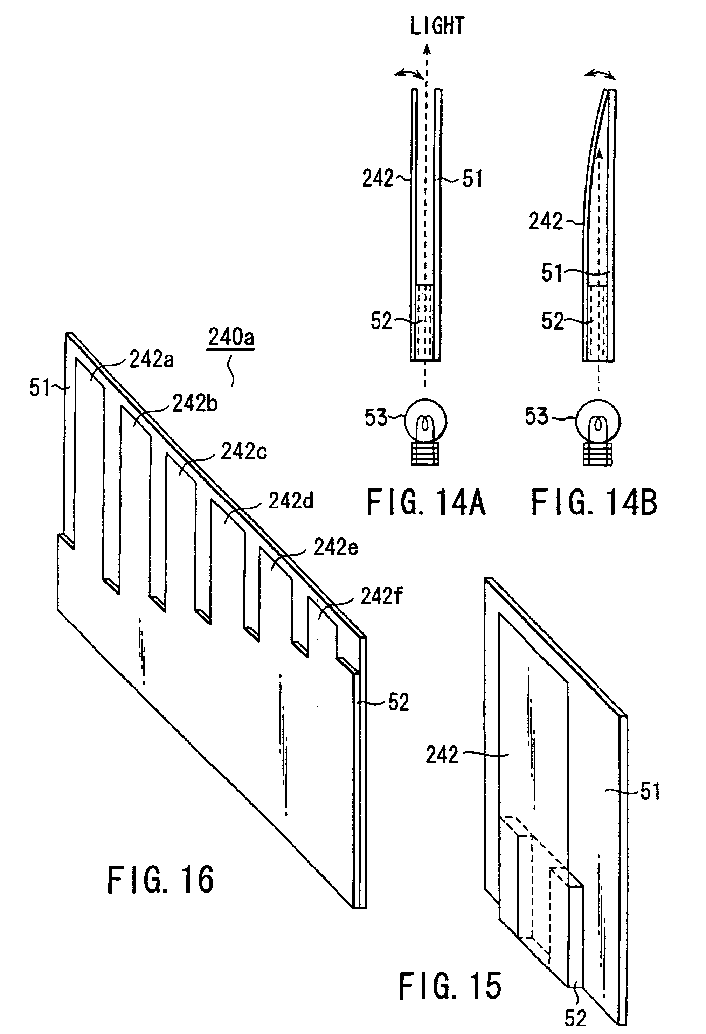

FIGS. 14A and 14B are schematic cross-sectional views for explaining the principal of a shutter unit for use in the actuated film display device according to a fourth embodiment of the present invention.

In the fourth embodiment, the transparent light guiding fixed electrode portion is not formed on the surface of the transparent light guiding body. The shutter unit is formed by using two parallel planer electrodes, namely, a movable film electrode 232, and a fixed electrode 51, as shown in FIG. 14A. More specifically, a support body 52 having a light guiding hole, is formed at a longitudinal end of the space between the movable film electrode 242 and the fixed electrode 51. When no voltage is applied between both electrodes, the light from a light source 53 passes through the hole of the support body 52 and is emitted outside. When the voltage is applied between both electrodes, the movable film electrode 242 bends as shown in FIG. 14B. Therefore, light is shut off. In this case, it is preferable that the inner surface of the movable film electrode 242 facing the fixed electrode 51 and the inner surface of the support body 52 be colored black in order to absorb light.

More specifically, the shutter unit of the fourth embodiment is formed of the movable film electrode 242, the fixed electrode 51 and the support body 52, as shown in FIG. 15. The movable film electrode 242 is formed in the same manner and by using the same material as in the first embodiment. The fixed electrode 51 is arranged so as to face the movable film electrode 242 and formed of a hard metal such as stainless or a plastic such as polyester or polyimide. The support body 52 is interposed between both the electrodes, has the light guiding hole, and is formed of plastic such as polyester or polyimide, or ceramic.

One pixel (shutter set 140a) is formed by arranging six shutter units in the manner, for example, shown in FIG. 16. In FIG. 16, the shutter unit has the movable film electrodes 242a-242f different in length (that is, having six length values). A voltage is applied to the movable film electrodes by a variable voltage source (not shown) in the same manner as in the first embodiment. The fixed electrode 51 is, for example, grounded. Light is applied upwardly from the below.

In the fourth embodiment, the length of the movable film electrodes 242a-242f are set at about 6.5 mm, about 5.5 mm, about 4.5 mm, about 3.5 mm, about 2.5 mm, and about 1.5 mm. The same voltage is gradually applied to the movable film electrodes 242a-242f. When the voltage reaches a critical point for one of the movable film electrodes, the movable film electrode is suddenly displaced. In this manner, the movable film electrodes are subsequently displaced upon reaching their critical points. In the fourth embodiment, the critical voltages are about 52V, about 55V, about 60V, about 70V, about 90V, about 120V. The reason why the critical voltages differ is that the movable film electrodes 242a-242f differ in length in the same manner as in the first embodiment, and accordingly the respective elastic forces and electrostatic forces differ, with the result that the positions of the movable film electrodes 242a-242c are displaced suddenly at different potential differences. In the fourth embodiment, the longest movable film electrode 242a reaches its critical point at the smallest potential difference. Although not shown in the figure, a planar fixed electrode is arranged at the opposite side of the fixed electrode 51 with movable film electrodes 242a-242f sandwiched between them. By virtue of the presence of the planar fixed electrode, the displacement of the movable film electrodes 242a-242f can be more stabilized.

If the shutter sets 240a of the fourth embodiment, are also arranged in the form of a matrix as shown in FIG. 11, an active matrix type display device can be constituted.

Also in the fourth embodiment, the number of movable films selectively opened/shut can be changed by changing only the voltage applied to one pixel in the same manner as in the first embodiment. Therefore, it is not necessary to display the gray scale by using numerous signal lines and scanning lines.

### (Fifth embodiment)

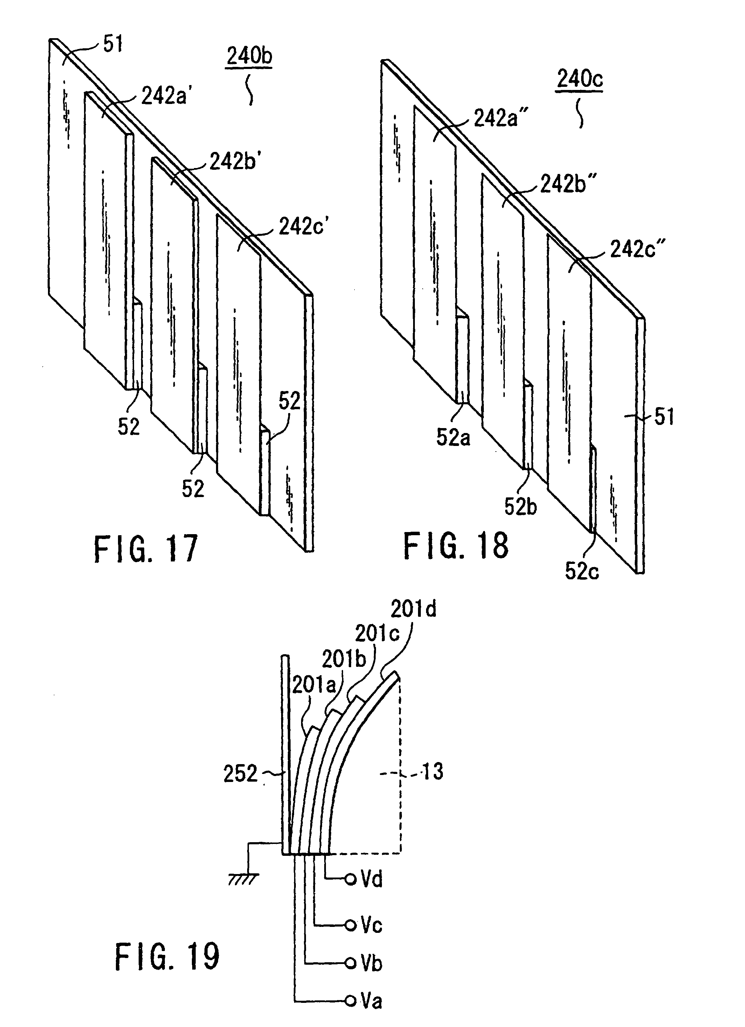

FIG. 17 is a schematic perspective view of a shutter set corresponding to one pixel of the actuated film display device according to the fifth embodiment of the present invention. The fifth embodiment is the same as the fourth embodiment in that the shutter unit is formed by using a parallel planer electrode, namely, a movable film electrode and a fixed electrode, but differs in that the shutter set 240b corresponding to one pixel is formed by using the movable film electrodes same in length but different in thickness (having at least two thicknesses).

In the fifth embodiment, the fixed electrode 51, the support body 52, the movable film electrodes 242a'-242c' may be formed of the same materials in the same manner as in the fourth embodiment.

However, all the movable film electrodes 242a'-242c' have the same length of 2.5 mm. The thicknesses of the electrodes 242a'-242c' are set at about 18 µm, about 12 µm, and about 6 µm.

The same voltage is gradually applied to the three types of movable film electrodes 242a'-242c'. When the voltage reaches a critical point for one of the movable film electrodes, the movable film electrode is suddenly displaced. In this manner, the movable film electrodes are subsequently displaced upon reaching their critical points. In the fifth embodiment, the critical voltages corresponding to critical points C, B, A are different with each other. They are about 180V, about 90V, and about 45V. This is because the movable film electrodes 242a'-242c' differ in thickness, and therefore the respective elastic forces and electrostatic forces differ, with the result that the film electrodes 242a'-242c' are displaced suddenly at different potential differences. In the fifth embodiment, the thinnest movable film electrode 242c' reaches the critical point at the smallest potential difference. Although not shown in the figure, a planar fixed electrode is arranged at the opposite side of the fixed electrodes 51 with the movable film electrodes 242a'-242c' sandwiched between them. By virtue of the presence of the planar fixed electrode, the displacement of the movable film electrodes 242a'-242c' can be more stabilized.

If the shutter sets 240b of the fifth embodiment, are arranged in the form of a matrix as shown in FIG. 11, a actuated film display device can be constituted.

Therefore, also in the fifth embodiment, the number of movable films selectively opened/shut can be changed by changing only the voltage applied to one pixel, as in the same way as in the first embodiment. Therefore, it is not necessary to display the gray scale by using numerous signal lines and scanning lines.

### (Sixth embodiment)

FIG. 18 is a schematic perspective view of a shutter set corresponding to one pixel of the actuated film display device according to the sixth embodiment of the present invention. The sixth embodiment is the same as the fourth embodiment in that the shutter unit is formed by using a parallel planer electrode, namely, a movable film electrode and a fixed electrode but differs in that the shutter set 240b corresponding to one pixel is formed by setting at least two distances between the fixed electrodes and the fixed ends of the movable film electrodes.

In the sixth embodiment, the fixed electrode 51, support bodies 52a-52c, and the movable film electrodes 242a''-242c'' is formed of the same materials and in the same method as in the fourth embodiment and the wiring of them is carried out in the same manner as in the fourth embodiment.

However, all the movable film electrodes 242a''-242c'' have the same length of about 2.5 mm. The thicknesses of the support bodies 52a-52c, that is, the distances between the fixed electrodes 51 and the movable film electrodes 242a"-242c" are about 150 µm, about 100 µm and about 50 µm, respectively.

The same voltage is gradually applied to the three types of movable film electrodes 242a"-242c". When the voltage reaches a critical point for one of the movable film electrodes, the movable film electrode is suddenly displaced. In this manner, the movable film electrodes are subsequently displaced upon reaching their critical points. In the sixth embodiment, the critical voltages corresponding to critical voltages C, B, A are different with each other. They are about 210V, about 130V, and about 90V. This is because the distances between the movable film electrodes 242a''-242c'' and the fixed electrode 51, differ, and therefore the respective elastic forces and electrostatic forces differ, with the result that the film electrodes 242a"-242c" are displaced suddenly at different potential differences. In the sixth embodiment, the movable film electrode 242c placed at the shortest distance from the fixed electrode reaches the critical point at the smallest potential difference. Although not shown in the figure, a planar fixed electrode is arranged at the opposite side of the fixed electrode 51 with the movable film electrodes 242a"-242c" sandwiched between them. By virtue of the presence of the planar fixed electrode, the displacement of the movable film electrodes 242a" to 242c" can be more stabilized.

If the shutter sets 140c of the sixth embodiment, are arranged in the form of a matrix as shown in FIG. 11, an active actuated film display device can be constituted.

Therefore, also in the sixth embodiment, the number of movable films selectively opened/shut is changed by changing only the voltage applied to one pixel, as in the same way as in the first embodiment. Therefore, it is not necessary to display the gray scale by using numerous signal lines and scanning lines.

### (Example useful for understanding the invention)

FIG. 19 is a schematic cross-sectional view of a shutter unit corresponding to one pixel of the actuated film display device according to an example useful for understanding the invention. In the example, different voltages are applied to stacked fixed electrodes 201a-201d, respectively. Since the bending amount of the movable film electrode 252 is changed based on the respective voltages applied to the stacked electrodes, the light amount passing through the movable film electrode is changed to thereby display gray scale. Therefore, it is possible to form one pixel capable of displaying the gray scale by one shutter unit.

First, the movable film electrode 252 is formed of the same material and in the same method as in the first embodiment. Then, the fixed electrodes 201a-201d are formed of a conductive material such as gold, copper or aluminium in a thickness of about 10-100 nm. The surface of each of the fixed electrodes facing the movable film electrode 252 is coated, in a thickness of about 10 µm, with a resin such as polyimide, polyester, nylon or polycarbonate. The fixed electrodes 201a-201d may be fixed while maintaining a bent form. Alternatively, as shown by a broken line in FIG. 19, the transparent light guiding body 13 is formed in the same manner as in the first embodiment, and then, the fixed electrodes may be formed on the surface of the transparent light guiding body 13.

The movable film electrode 132 is, for example, grounded. To the fixed electrodes 202a-202d, voltage Va, Vb, Vc and Vd are applied depending upon the display signals. In accordance with the respective potentials to be supplied to the electrodes, the bending amount of the movable film electrode 252 differs. As a result, since the light amount passing through the electrode differs, gray scale can be displayed. In FIG. 19, light is applied upwardly from below. Although not shown in the figure, a planar fixed electrode may be arranged at the opposite side of the fixed electrodes 201a-201d sandwiching the movable film electrode 252 between them and an appropriate voltage is applied to the electrode. By virtue of the presence of the planar fixed electrode, the displacement of the movable film electrode 252 can be more stabilized.

In the example, the gray scale can be displayed by one shutter unit. Therefore, it is possible to display the gray scale without using numerous signal lines and scanning lines as is the same as in the aforementioned embodiments.

In the above-described embodiments, the present invention is applied to the transmissive display device. However, the present invention is not limited to this, and is also applicable to the reflective display device.

## Claims

1. An actuated film display device comprising:
a first fixed electrode (231a, 231a', 51, 201a);
a first movable film electrode (232a, 232a', 232a", 242a, 242a', 242", 252), which is placed to face the first fixed electrode to form a first optical path on an opposing side to the first fixed electrode, and which has a fixed end and a movable end, the movable end being displaced toward the first fixed electrode by application of a first critical voltage (11) between the first fixed electrode and the first movable film electrode, thereby shutting off the first optical path;
a second fixed electrode (231b, 231b', 51, 201b); and
a second movable film electrode (232b, 232b', 232b", 242b, 242b', 242b", 252) which is placed to face the second fixed electrode to form a second optical path on an opposing side to the second fixed electrode, which has a fixed end and a movable end, the movable end being displaced toward the second fixed electrode by application of a second critical voltage (11) between the second fixed electrode and the second movable film electrode, thereby shutting off the second optical path;
**characterized in that** the second critical voltage is different from the first critical voltage, and the first movable film electrode and the second movable film electrode are connected to a single signal line.

2. The actuated film display device according to claim 1, **characterized by** further comprising a plurality of pixels (230a), each of the plurality of pixels including a pair of the first fixed electrode (231a, 51) and the first movable film electrode (232a, 242a) and a pair of the second fixed electrode (231b, 51) and the second movable film electrode (232b, 242b).

3. The actuated film display device according to claim 1, **characterized by** further comprising:
a plurality of optical shutter sets (230a) arranged in rows and columns, each of the optical shutter sets comprising at least two optical shutter units different in applied voltage/displacement characteristics, each of said at least two optical shutter units being formed of a pair of the first fixed electrode (231a, 51) and the first movable film electrode (232a, 242a) and a pair of the second fixed electrode (231b, 51) and the second movable electrode (232b, 242b); and
a first driving circuit for supplying a driving signal to the optical shutter sets arranged in each of the rows; and
a second driving circuit for supplying a driving signal to the optical shutter sets arranged in each of the columns;
wherein the first driving circuit supplies a first potential to the first and the second fixed electrode (231a, 231b, 51) of the optical shutter units (230a) in each of the rows, and
said second driving circuit supplies a second potential to the first and the second movable film electrode (232a, 232b, 242a, 242b) of the optical shutter units in each of the columns.

4. The actuated film display device according to any one of claims 1,2 and 3, **characterized in that** a distance between the fixed end and the movable end of the first movable film electrode (232a, 242a) differs from a distance between the fixed end and the movable end of the second movable film electrode (232b, 242b).

5. The actuated film display device according to any one of claims 1, 2 and 3, **characterized in that** a thickness of the first movable film electrode (232a', 242a') differs from a thickness of the second movable film electrode (232b', 242b').

6. The actuated film display device according to any one of claims 1, 2 and 3, **characterized in that** a distance between the first fixed electrode (231a', 51) and the fixed end of the first movable film electrode (232a", 242a") differs from a distance between the second fixed electrode (231b', 51) and the fixed end of the second movable film electrode (232b", 242b").

7. The actuated film display device according to any one of claims 1, 2 and 3, **characterized in that** the first and the second fixed electrode (51) is a plate-form electrode which faces a corresponding one of the first and the second movable film electrode (242a, 242a', 242a", 242b, 242b', 242") so as to form a light guiding portion therebetween.

8. The actuated film display device according to claim 7, **characterized by** further comprising an insulating layer covering at least a tip portion of each of the first and the second fixed electrode (51).

9. The actuated film display device according to any one of claims 1, 2 and 3, **characterized in that** each of the first and the second fixed electrode (231a, 231b) and the single fixed electrode (201a, 201b) comprises a light guiding portion (13a, 13b, 13) which is formed of a transparent material and has a curved surface which faces a corresponding one of the first and the second movable film electrode (232a, 232b) and the single movable film electrode (252), and an electrode formed of a transparent conductive layer and formed on the curved surface.

10. The actuated film display device according to claim 9, **characterized by** further comprising an insulating layer covering the transparent conductive layer.

11. The actuated film display device according to any one of claims 1, 2 and 3, **characterized by** further comprising a light source (12, 53) arranged at a side of the fixed end of the movable film electrode (232a, 242a, 252).

## Patentansprüche

1. Ausgelöste Filmanzeigeeinrichtung, umfassend:
eine erste fixierte Elektrode (231a, 231a', 51, 201a);
eine erste bewegliche Filmelektrode (232a, 232a', 232a'', 242a, 242a', 242'', 252), die platziert ist, der ersten fixierten Elektrode gegenüberzuliegen, um einen ersten optischen Pfad auf einer entgegengesetzten Seite zu der ersten fixierten Elektrode zu bilden, und die ein fixiertes Ende und ein bewegliches Ende hat, wobei das bewegliche Ende zu der ersten fixierten Elektrode durch Anwendung einer ersten kritischen Spannung (11) zwischen der ersten fixierten Elektrode und der ersten beweglichen Filmelektrode verlagert wird, wobei dadurch der erste optische Pfad abgesperrt wird;
eine zweite fixierte Elektrode (231b, 231b', 51, 201b); und
eine zweite bewegliche Filmelektrode (232b, 232b', 232b'', 242b, 242b', 242b'', 252), die platziert ist, der zweiten fixierten Elektrode gegenüberzuliegen, um einen zweiten optischen Pfad auf einer entgegengesetzten Seite zu der zweiten fixierten Elektrode zu bilden, die ein fixiertes Ende und ein bewegliches Ende hat, wobei das bewegliche Ende zu der zweiten fixierten Elektrode durch Anwendung einer zweiten kritischen Spannung (11) zwischen der zweiten fixierten Elektrode und der zweiten beweglichen Filmelektrode verlagert wird, wobei dadurch der zweite optische Pfad abgesperrt wird;
**gekennzeichnet dadurch, dass** sich die zweite kritische Spannung von der ersten kritischen Spannung unterscheidet, und die erste bewegliche Filmelektrode und die zweite bewegliche Filmelektrode zu einer einzelnen Signalleitung verbunden sind.

2. Ausgelöste Filmanzeigeeinrichtung nach Anspruch 1, **gekennzeichnet dadurch**, ferner eine Vielzahl von Pixeln (230a) zu umfassen, wobei jedes aus der Vielzahl von Pixeln ein Paar der ersten fixierten Elektrode (231a, 51) und der ersten beweglichen Filmelektrode (232a, 242a) und ein Paar der zweiten fixierten Elektrode (231b, 51) und der zweiten beweglichen Filmelektrode (232b, 242b) inkludiert.

3. Ausgelöste Filmanzeigeeinrichtung nach Anspruch 1, **gekennzeichnet dadurch**, ferner zu umfassen:
eine Vielzahl von optischen Verschlussmengen (230a), die in Zeilen und Spalten angeordnet sind, wobei jede der optischen Verschlussmengen mindestens zwei optische Verschlusseinheiten umfasst, die sich in angewendeter Spannung/Verlagerungscharakteristika unterscheiden, jede der mindestens zwei optische Verschlusseinheiten aus einem Paar der ersten fixierten Elektrode (231a, 51) und der ersten beweglichen Filmelektrode (232a, 242a) und einem Paar der zweiten fixierten Elektrode (231b, 51) und der zweiten beweglichen Elektrode (232b, 242b) gebildet wird; und
eine erste Ansteuerschaltung zum Zuführen eines Ansteuersignals zu den optischen Verschlussmengen, die in jeder der Zeilen angeordnet sind; und
eine zweite Ansteuerschaltung zum Zuführen eines Ansteuersignals zu den optischen Verschlussmengen, die in jeder der Spalten angeordnet sind;
wobei die erste Ansteuerschaltung ein erstes Potenzial der ersten und der zweiten fixierten Elektrode (231a, 231b, 51) der optischen Verschlusseinheiten (230a) in jeder der Zeilen zuführt, und
die zweite Ansteuerschaltung ein zweites Potenzial der ersten und der zweiten beweglichen Filmelektrode (232a, 232b, 242a, 242b) der optischen Verschlusseinheiten in jeder der Spalten zuführt.

4. Ausgelöste Filmanzeigeeinrichtung nach einem beliebigen von Ansprüchen 1, 2 und 3, **gekennzeichnet dadurch, dass** sich ein Abstand zwischen dem fixierten Ende und dem beweglichen Ende der ersten beweglichen Filmelektrode (232a, 242a) von einem Abstand zwischen dem fixierten Ende und dem beweglichen Ende der zweiten beweglichen Filmelektrode (232b, 242b) unterscheidet.

5. Ausgelöste Filmanzeigeeinrichtung nach einem beliebigen von Ansprüchen 1, 2 und 3, **gekennzeichnet dadurch, dass** sich eine Stärke der ersten beweglichen Filmelektrode (232a', 242a') von einer Stärke der zweiten beweglichen Filmelektrode (232b', 242b') unterscheidet.

6. Ausgelöste Filmanzeigeeinrichtung nach einem beliebigen von Ansprüchen 1, 2 und 3, **gekennzeichnet dadurch, dass** sich ein Abstand zwischen der ersten fixierten Elektrode (231a', 51) und dem fixierten Ende der ersten beweglichen Filmelektrode (232a'', 242a'') von einem Abstand zwischen der zweiten fixierten Elektrode (231b', 51) und dem fixierten Ende der zweiten beweglichen Filmelektrode (232b'', 242b'') unterscheidet.

7. Ausgelöste Filmanzeigeeinrichtung nach einem beliebigen von Ansprüchen 1, 2 und 3, **gekennzeichnet dadurch, dass** die erste und die zweite fixierte Elektrode (51) eine Plattenformelektrode ist; die einer entsprechenden der ersten und der zweiten beweglichen Filmelektrode (242a, 242a', 242a'', 242b, 242b', 242'') so gegenüberliegt, um einen Lichtführungsabschnitt dazwischen zu bilden.

8. Ausgelöste Filmanzeigeeinrichtung nach Anspruch 7, **gekennzeichnet dadurch**, ferner eine isolierende Schicht zu umfassen, die mindestens einen Spitzenabschnitt von jeder der ersten und der zweiten fixierten Elektrode (51) abdeckt.

9. Ausgelöste Filmanzeigeeinrichtung nach einem beliebigen von Ansprüchen 1, 2 und 3, **gekennzeichnet dadurch, dass** jede der ersten und der zweiten fixierten Elektrode (231a, 231b) und der einzelnen fixierten Elektrode (201a, 201b) umfasst einen Lichtführungsabschnitt (13a, 13b, 13), der aus einem transparenten Material gebildet ist und eine gekrümmte Fläche hat, die einer entsprechenden der ersten und der zweiten beweglichen Filmelektrode (232a, 232b) und der einzelnen beweglichen Filmelektrode (252) gegenüberliegt, und eine Elektrode, die aus einer transparenten leitenden Schicht gebildet und auf der gekrümmte Fläche gebildet ist.

10. Ausgelöste Filmanzeigeeinrichtung nach Anspruch 9, **gekennzeichnet dadurch**, ferner eine isolierende Schicht zu umfassen, die die transparente leitende Schicht abdeckt.

11. Ausgelöste Filmanzeigeeinrichtung nach einem beliebigen von Ansprüchen 1, 2 und 3, **gekennzeichnet dadurch**, ferner eine Lichtquelle (12, 53) zu umfassen, die an einer Seite des fixierten Endes der beweglichen Filmelektrode (232a, 242a, 252) angeordnet ist.

## Revendications

1. Dispositif d'affichage à film actionné comprenant:
une première électrode fixe (231a, 231a', 51, 201a);
une première électrode de film mobile (232a, 232a', 232a", 242a, 242a', 242a", 252) qui est placée de manière à faire face à la première électrode fixe pour former un premier chemin optique sur un côté opposé à la première électrode fixe et qui comporte une extrémité fixe et une extrémité mobile, l'extrémité mobile étant déplacée en direction de la première électrode fixe au moyen de l'application d'une première tension critique (11) entre la première électrode fixe et la première électrode de film mobile, d'où ainsi l'obturation du premier chemin optique;
une seconde électrode fixe (231b, 231b', 51, 201b); et
une seconde électrode de film mobile (232b, 232b', 232b", 242b, 242b', 242b", 252) qui est placée de manière à faire face à la seconde électrode fixe pour former un second chemin optique sur un côté opposé à la seconde électrode fixe et qui comporte une extrémité fixe et une extrémité mobile, l'extrémité mobile étant déplacée en direction de la seconde électrode fixe au moyen de l'application d'une seconde tension critique (11) entre la seconde électrode fixe et la seconde électrode de film mobile, d'où ainsi l'obturation du second chemin optique,
**caractérisé en ce que** la seconde tension critique est différente de la première tension critique et la première électrode de film mobile et la seconde électrode de film mobile sont connectées à une unique ligne de signal.

2. Dispositif d'affichage à film actionné selon la revendication 1, **caractérisé en ce qu'**il comprend en outre une pluralité de pixels (230a), chacun de la pluralité de pixels incluant une paire constituée par la première électrode fixe (231a, 51) et par la première électrode de film mobile (232a, 242a) et une paire constituée par la seconde électrode fixe (231b, 51) et par la seconde électrode de film mobile (232b, 242b).

3. Dispositif d'affichage à film actionné selon la revendication 1, **caractérisé en ce qu'**il comprend en outre:
une pluralité de jeux d'obturateurs optiques (230a) qui sont agencés selon des rangées et des colonnes, chacun des jeux d'obturateurs optiques comprenant au moins deux unités d'obturateur optique différentes en termes de caractéristiques de tension appliquée/déplacement, chacune desdites au moins deux unités d'obturateur optique étant formée par une paire constituée par la première électrode fixe (231a, 51) et par la première électrode de film mobile (232a, 242a) et par une paire constituée par la seconde électrode fixe (231b, 51) et par la seconde électrode mobile (232b, 242b);
un premier circuit de pilotage pour appliquer un signal de pilotage sur les jeux d'obturateurs optiques qui sont agencés dans chacune des rangées; et
un second circuit de pilotage pour appliquer un signal de pilotage sur les jeux d'obturateurs optiques qui sont agencés dans chacune des colonnes,
dans lequel le premier circuit de pilotage applique un premier potentiel sur les première et seconde électrodes fixes (231a, 231b, 51) des unités d'obturateur optique (230a) dans chacune des rangées; et
ledit second circuit de pilotage applique un second potentiel sur les première et seconde électrodes de film mobile (232a, 232b, 242a, 242b) des unités d'obturateur optique dans chacune des colonnes.

4. Dispositif d'affichage à film actionné selon l'une quelconque des revendications 1, 2 et 3, **caractérisé en ce qu'**une distance entre l'extrémité fixe et l'extrémité mobile de la première électrode de film mobile (232a, 242a) diffère d'une distance entre l'extrémité fixe et l'extrémité mobile de la seconde électrode de film mobile (232b, 242b).

5. Dispositif d'affichage à film actionné selon l'une quelconque des revendications 1, 2 et 3, **caractérisé en ce qu'**une épaisseur de la première électrode de film mobile (232a', 242a') diffère d'une épaisseur de la seconde électrode de film mobile (232b', 242b').

6. Dispositif d'affichage à film actionné selon l'une quelconque des revendications 1, 2 et 3, **caractérisé en ce qu'**une distance entre la première électrode fixe (231a', 51) et l'extrémité fixe de la première électrode de film mobile (232a", 242a") diffère d'une distance entre la seconde électrode fixe (231b', 51) et l'extrémité fixe de la seconde électrode de film mobile (232b", 242b").

7. Dispositif d'affichage à film actionné selon l'une quelconque des revendications 1, 2 et 3, **caractérisé en ce que** les première et seconde électrodes fixes (51) sont une électrode de plate-forme qui fait face à l'une correspondante des première et seconde électrodes de film mobile (242a, 242a', 242a", 242b, 242b', 242b") de manière à former entre une partie de guidage de lumière.

8. Dispositif d'affichage à film actionné selon la revendication 7, **caractérisé en ce qu'**il comprend en outre une couche isolante qui recouvre au moins une partie de pointe de chacune des première et seconde électrodes fixes (51).

9. Dispositif d'affichage à film actionné selon l'une quelconque des revendications 1, 2 et 3, **caractérisé en ce que** chacune des première et seconde électrodes fixes (231a, 231b) et de l'unique électrode fixe (201a, 201b) comprend une partie de guidage de lumière (13a, 13b, 13) qui est formée en un matériau transparent et qui comporte une surface courbe qui fait face à l'une correspondante des première et seconde électrodes de film mobile (232a, 232b) et de l'unique électrode de film mobile (252), et une électrode qui est formée en une couche conductrice transparente et qui est formée sur la surface courbe.

10. Dispositif d'affichage à film actionné selon la revendication 9, **caractérisé en ce qu'**il comprend en outre une couche isolante qui recouvre la couche conductrice transparente.

11. Dispositif d'affichage à film actionné selon l'une quelconque des revendications 1, 2 et 3, **caractérisé en ce qu'**il comprend en outre une source de lumière (12, 53) qui est agencée au niveau d'un côté de l'extrémité fixe de l'électrode de film mobile (232a, 242a, 252).
